# FASCICULE DE BREVET EUROPEEN

(11) **EP 2 249 509 B1**
(45) Date de publication et mention de la délivrance du brevet: **22.02.2012**
(21) Numéro de dépôt: 10004303.3
(22) Date de dépôt: 22.04.2010
(51) Int. Cl.: H04L 9/06, G01R 31/3185

(54) **Circuit integré sécurisé comprenant des moyens de divulgation de valeurs de masque de contre-mesure**
Gesicherte integrierte Schaltungsanordnung mit Mitteln zur Bekanntgabe von Maskierungswerten für Gegenmassnahmen
Secure integrated circuit comprising divulgation means of mask counter measure values

(30) Priorité: 07.05.2009 FR 0902205
(43) Date de publication de la demande: 10.11.2010
(73) Titulaire: Inside Secure, 13856 Aix-en-Provence Cedex 3 (FR)
(72) Inventeur: Feix, Benoît, 13400 Aubagne (FR); Nerot, Sébastian, 13490 Jouques (FR); Chew, Gary, 13090 Aix en Provence (FR); Vian, Bernard, 13420 Gemenos (FR)
(74) Mandataire: Marchand, André

(56) Documents cités:
- EP-A2- 1 329 787
- EP-A2- 1 331 539
- US-A1- 2005 138 481
- US-B1- 6 278 783

## Description

La présente invention concerne un circuit intégré comprenant un circuit d'interface de communication, un algorithme de cryptographie, des moyens de contre-mesure pour protéger l'algorithme de cryptographie contre les attaques par canaux auxiliaires, et des moyens de génération de masque pour fournir aux moyens de contre-mesure des valeurs de masque.

La présente invention concerne plus particulièrement mais non exclusivement des circuits intégrés pour cartes à puce.

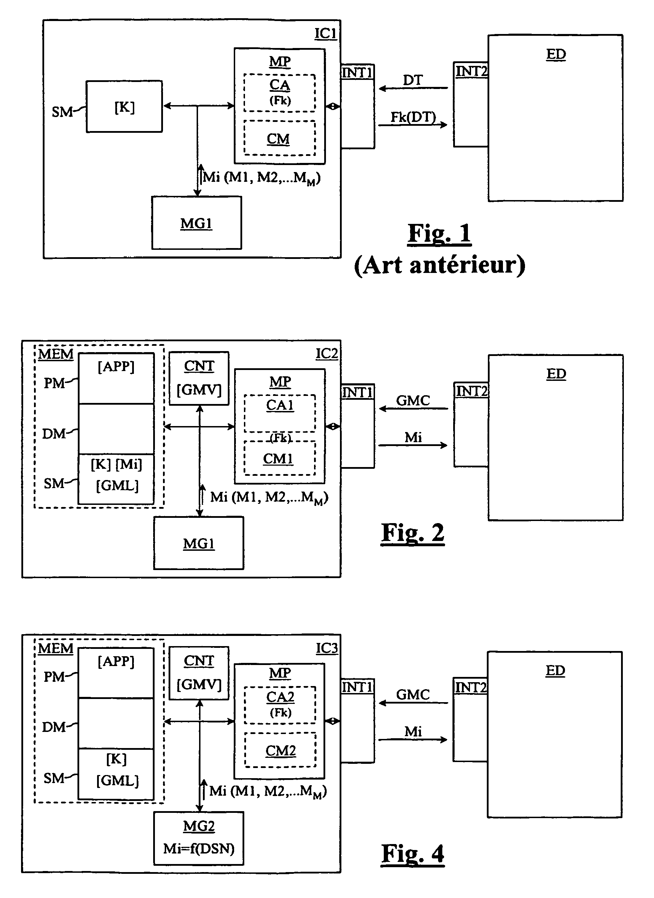

La figure 1 illustre un circuit intégré conventionnel IC1 comprenant un microprocesseur MP, une mémoire sécurisée SM, un algorithme de cryptographie CA, des moyens de contre-mesure CM et un générateur de masque MG. Le circuit intégré comprend également un circuit d'interface de communication INT1 pour échanger des données avec un dispositif externe ED tel qu'un lecteur de carte à puce, qui comprend également un circuit d'interface de communication INT2. La mémoire sécurisée SM comprend une clé secrète K pour l'algorithme de cryptographie CA. L'algorithme de cryptographie CA exécute une fonction de cryptographie F_{K} au moyen de la clé secrète K afin de transformer des données initiales DT en données cryptées F_{K}(DT).

L'algorithme de cryptographie CA est utilisé par le circuit intégré pour crypter des données secrètes à envoyer au dispositif externe. Dans le domaine des cartes à puce exécutant des applications sécurisées (transaction, contrôle d'accès, etc.) l'algorithme de cryptographie CA est souvent utilisé pour effectuer l'authentification du circuit intégré IC1 par le dispositif externe, et parfois utilisé pour effectuer l'authentification du dispositif externe par le circuit intégré.

Par exemple, le dispositif externe envoie un « challenge » DT, en général des données aléatoires, puis le circuit intégré crypte le challenge à l'aide l'algorithme de cryptographie et fournit le résultat F_{K}(DT) au dispositif externe. Le dispositif externe compare ensuite cette réponse avec le résultat qu'il attend, qu'il a calculé avec son propre algorithme de cryptographie. Si les deux résultats sont identiques, le circuit intégré est considéré comme authentique et est autorisé à effectuer la transaction.

La clé K ou toute autre information secrète détenue par le circuit intégré est par conséquent soumise aux attaques de fraudeurs. Les « attaques par canaux auxiliaires » utilisent des informations que l'attaquant peut observer ou détecter afin de déterminer des paramètres de l'algorithme de cryptographie, par exemple la clé. Les attaques par canaux auxiliaires peuvent être mises en oeuvre contre tous types d'algorithmes de cryptographie et fournir des informations sur l'état de l'algorithme de cryptographie. Les attaques par canaux auxiliaires peuvent être passives, comme la surveillance de la durée ou la consommation des calculs (Analyse de consommation simple SPA (Simple Power Analysis) ou Analyse de consommation différentielle DPA (Differential Power Analysis)), ou actives, comme l'introduction d'erreurs lors d'opérations sensibles (attaques par injection de fautes DFA (Differential Fault Analysis)).

Les moyens de contre-mesure CM sont prévus pour empêcher ou au moins ralentir ces attaques par canaux auxiliaires en utilisant des valeurs de masque Mi (M1, M2, ...Mm). Ces valeurs de masque sont fournies par le générateur de masque MG1, qui comprend en général un générateur de nombres aléatoires ou pseudo-aléatoires. L'attaquant ne connaît pas de telles valeurs de masque qui permettent d'occulter le fonctionnement de l'algorithme de cryptographie CA, par exemple par une opération ou exclusif (XOR) appliquée aux données à crypter, à la clé, ou les deux, ou qui sont utilisées pour brouiller l'ordre des opérations dans lequel l'algorithme de cryptographie calcule le résultat F_{K}(DT). Des données intermédiaires, comme une itération simple d'un algorithme de cryptographie à itération multiple, peuvent également être modifiées par les valeurs de masque Mi. Des paramètres physiques externes observables, tels que la consommation électrique du circuit intégré lors d'une session de cryptographie, sont par conséquent altérés.

Les attaques par canaux auxiliaires sont ainsi rendues inefficaces ou beaucoup plus difficiles à mettre en oeuvre puisque l'observation de l'exécution de l'algorithme de cryptographie CA ne révèle pas les secrets du circuit intégré. Cependant, puisqu'une ou plusieurs valeurs de masque Mi sont générées de façon aléatoire ou pseudo-aléatoire chaque fois que l'algorithme de cryptographie CA est exécuté, l'algorithme de cryptographie CA ne peut être exécuté qu'une fois avec les mêmes paramètres. Cela cause des difficultés lors de la conception ou du processus de débogage car les valeurs de masque sont imprévisibles de l'extérieur.

Par conséquent, il peut être souhaité de permettre de tester et déboguer un algorithme de cryptographie ayant des moyens de contre-mesure, sans affecter la sécurité de l'algorithme de cryptographie.

Le document US 2005/0138481 décrit un microcontrôleur comprenant des moyens pour déboguer un programme de contrôle d'accès à une zone mémoire protégée. A cet effet, une adresse d'accès à la zone mémoire protégée est remplacée en temps réel par une adresse pointant vers une zone mémoire se situant à l'extérieur de la zone mémoire protégée.

Le document EP 1 329 787 décrit un procédé pour faire fonctionner un système numérique tel un téléphone portable. Le procédé comprend la prévision d'un mode de fonctionnement sécurisé dans lequel uniquement un programme de confiance peut être exécuté. Des moyens indicateurs du mode sécurisé, par exemple une diode DEL, ne peuvent être activés que par le programme de confiance pendant l'exécution du mode de fonctionnement sécurisé.

Le document EP 1 331 539 décrit un procédé pour faire entrer un processeur dans un mode de fonctionnement sécurisé, à partir d'un point d'entrée unique auquel le processeur accède en effectuant un saut à une adresse déterminée dans une mémoire d'instruction. Le processeur exécute ensuite, à partir de cette adresse, une séquence d'activation du mode de fonctionnement sécurisé. Le processeur n'entre dans le mode de fonctionnement sécurisé que si la séquence d'instruction a été exécutée dans un ordre prédéterminé.

Le document US 6 278 783 décrit un procédé de contre-mesure applicable à une opération de cryptographie. Le procédé comprend la génération d'une information imprédictible; l'utilisation de l'information imprédictible pour transformer une donnée secrète aléatoire initiale en une pluralité de données secrètes aléatoires ayant une relation logique entre elles; l'exécution de l'opération de cryptographie en utilisant les données aléatoires, afin de réduire la quantité d'information pouvant être détectée de l'extérieur pendant l'exécution de l'opération de cryptographie.

Le document D5 : US2008/052582 décrit un contrôleur de bus pour une interface JTAG comprenant un registre de test et une machine de communication à état fini ou les registres de test sont configuré pour échanger des commandes et des données entre l'appareil de test et le système à tester via l'interface de communication JTAG.

Plus particulièrement, des modes de réalisation de l'invention concernent un circuit intégré comprenant un circuit d'interface de communication, un algorithme de cryptographie, des moyens de contre-mesure pour protéger l'algorithme de cryptographie contre les attaques par canaux auxiliaires, et des moyens de génération de masque pour fournir aux moyens de contre-mesure des valeurs de masque, le circuit intégré étant configuré pour exécuter une commande spécifique requérant la divulgation des valeurs de masque utilisées par les moyens de contre-mesure pour protéger l'algorithme de cryptographie lors d'une session de cryptographie, et, en réponse à une telle commande, envoyer les valeurs de masque par l'intermédiaire du circuit d'interface de communication.

Selon un mode de réalisation, le circuit intégré comprend des moyens de génération de masque aléatoires ou pseudo-aléatoires et il est configuré pour stocker dans une mémoire sécurisée, lors d'une session de cryptographie, des valeurs de masque utilisées par les moyens de contre-mesure pour protéger l'algorithme de cryptographie, et en réponse à la commande spécifique, lire les valeurs de masque dans la mémoire sécurisée.

Selon un mode de réalisation, le circuit intégré comprend des moyens de génération de masque configurés pour générer des valeurs de masque à partir d'un nombre de séquence déterministe, et est configuré pour, en réponse à la commande spécifique, régénérer, grâce aux moyens de génération de masque, des valeurs de masque utilisées lors d'une session de cryptographie.

Selon un mode de réalisation, le circuit intégré est configuré pour compter le nombre de fois que la commande spécifique a été exécutée, et ne pas exécuter la commande si elle a été exécutée N fois.

Selon un mode de réalisation, le circuit intégré est configuré pour effectuer une action de sécurité si la commande spécifique est reçue après avoir été exécutée N fois.

Selon un mode de réalisation, le circuit intégré est configuré pour se verrouiller de façon permanente si la commande spécifique est reçue après avoir été exécutée N fois.

Selon un mode de réalisation, le nombre N de fois que la commande spécifique peut être exécutée est défini par un paramètre stocké de façon sécurisée dans le circuit intégré.

Selon un mode de réalisation, le circuit intégré est configuré de telle sorte que le nombre N de fois que la commande spécifique peut être exécutée est inférieur au nombre estimé de fois qui seraient nécessaires pour qu'un attaquant connaissant les valeurs de masque exécute avec succès une attaque par canal auxiliaire de l'algorithme de cryptographie.

Selon un mode de réalisation, le circuit intégré comprend un mode test dans lequel le nombre de fois que la commande spécifique peut être exécutée n'est pas limité.

Des modes de réalisation de l'invention concernent également un dispositif portable comprenant un circuit intégré selon l'un des modes de réalisation décrits ci-dessus.

Des modes de réalisation de l'invention concernent également un procédé d'exécution d'une session de cryptographie dans un circuit intégré comprenant un algorithme de cryptographie, des moyens de contre-mesure pour protéger l'algorithme de cryptographie contre les attaques par canaux auxiliaires, et des moyens de génération de masque pour fournir aux moyens de contre-mesure des valeurs de masque, le procédé comprenant des étapes consistant à recevoir une commande spécifique requérant la divulgation des valeurs de masque utilisées par les moyens de contre-mesure pour protéger l'algorithme de cryptographie lors de la session de cryptographie, et, en réponse à une telle commande spécifique, envoyer les valeurs de masque.

Selon un mode de réalisation, le procédé comprend des étapes consistant à stocker dans une mémoire sécurisée, lors de la session de cryptographie, des valeurs de masque aléatoires ou pseudo-aléatoires utilisées par les moyens de contre-mesure pour protéger l'algorithme de cryptographie, et en réponse à la commande spécifique, lire les valeurs de masque dans la mémoire sécurisée.

Selon un mode de réalisation, le procédé comprend des étapes consistant à générer des valeurs de masque à partir d'un nombre de séquence déterministe, et en réponse à la commande spécifique, régénérer les valeurs de masque à l'aide du nombre de séquence déterministe.

Selon un mode de réalisation, le procédé comprend des étapes consistant à compter le nombre de fois que la commande spécifique a été exécutée, et ne pas exécuter la commande si elle a été exécutée N fois.

Selon un mode de réalisation, le procédé comprend une étape consistant à effectuer une action de sécurité si la commande spécifique est reçue après avoir été exécutée N fois.

Selon un mode de réalisation, le procédé comprend une étape consistant à verrouiller de façon permanente le circuit intégré si la commande spécifique est reçue après avoir été exécutée N fois.

Selon un mode de réalisation, le procédé selon comprend une étape consistant à déterminer le nombre N de fois que la commande spécifique peut être exécutée de telle sorte que N soit inférieur au nombre estimé de fois qui seraient nécessaires pour qu'un attaquant connaissant les valeurs de masque exécute avec succès une attaque par canal auxiliaire de l'algorithme de cryptographie.

Des modes de réalisation d'un circuit intégré selon l'invention et d'un algorithme de cryptographie selon l'invention seront exposés dans la description suivante faite à titre non limitatif en relation avec les figures jointes parmi lesquelles :
- la figure 1 illustre un circuit intégré conventionnel mettant en oeuvre un algorithme de cryptographie ;
- la figure 2 illustre un circuit intégré mettant en oeuvre un premier type d'algorithme de cryptographie selon l'invention ;
- les figures 3A, 3B sont des organigrammes décrivant des modes de réalisation du premier type d'algorithme de cryptographie ;
- la figure 4 illustre un circuit intégré mettant en oeuvre un second type d'algorithme de cryptographie selon l'invention ;
- les figures 5A, 5B sont des organigrammes décrivant des modes de réalisation du second type d'algorithme de cryptographie ;
- la figure 6 est un organigramme décrivant une variante des premier et second types d'algorithmes de cryptographie ; et
- la figure 7 illustre un dispositif portable comprenant un circuit intégré selon l'invention.

Un circuit intégré IC2 mettant en oeuvre un premier type d'algorithme de cryptographie selon l'invention est illustré sur la figure 2. Le circuit intégré IC2 comprend un microprocesseur ou un microcontrôleur MP, une zone mémoire MEM, un algorithme de cryptographie CA1, des moyens de contre-mesure CM1 et un générateur de masque MG1 constitué de ou comprenant un générateur de nombres aléatoires ou pseudo-aléatoires. Le circuit intégré comprend également un circuit d'interface de communication INT1 pour échanger des données avec un dispositif externe ED tel qu'un lecteur de carte à puce, qui comprend également un circuit d'interface de communication INT2. Les circuits d'interface de communication INT1, INT2 peuvent comprendre des contacts, tels que des contacts ISO 7816, ou une circuiterie d'interface sans contact tel qu'un circuit d'interface NFC (Near Field Communication), par exemple conformes à l'une des normes ISO 14443 et ISO 15693.

La mémoire MEM comprend une mémoire sécurisée SM qui comprend au moins une clé secrète K pour l'algorithme de cryptographie CA1 et peut également comprendre d'autres données à sécuriser, par exemple un code PIN (Personal Identification Number). La mémoire peut également comprendre une zone de mémoire programme PM et une zone de mémoire de données DM. La mémoire de programme peut contenir un ou des programme(s) d'application APP et la mémoire de données DM peut contenir des données d'application. L'algorithme de cryptographie CA1 exécute une fonction de cryptographie F_{K} au moyen de la clé secrète K afin de transformer des données initiales DT en données cryptées F_{K}(DT). L'algorithme de cryptographie CA1 peut être de n'importe quel type adapté par exemple DES (Data Encryption Standard), AES (Advanced Encryption Standard), fonctions de hachage et RSA, entre autres. Selon le type d'algorithme de cryptographie effectué, la clé K peut par exemple être publique ou privée.

L'algorithme de cryptographie CA1 ainsi que les moyens de contre-mesure CM1 peuvent être matériels, logiciels ou les deux. En particulier, l'algorithme de cryptographie CA1 peut être mis en oeuvre comme un programme stocké dans la mémoire de programme PM et exécuté par le microprocesseur, ou peut être un coprocesseur de cryptographie relié au microprocesseur par des bus de données et d'adresse et recevant du microprocesseur des données et des instructions pour crypter les données. Les moyens de contre-mesure CM1 peuvent être des étapes de contre-mesure particulières intégrées dans le logiciel de cryptographie et exécutées par le microprocesseur, ou exécutées par le coprocesseur de cryptographie. Selon un mode de réalisation choisi pour mettre en oeuvre l'algorithme de cryptographie CA1 et les moyens de contre-mesure CM1, le générateur de masque MG1 peut être contrôlé par le microprocesseur ou par le coprocesseur de cryptographie.

Lors de l'exécution d'une session de l'algorithme de cryptographie CA1, correspondant à la transformation des données d'entrée DT en données cryptées F_{K}(DT), le générateur de masque MG1 génère un ou plusieurs nombres aléatoires ou pseudo-aléatoires qui sont utilisés comme valeurs de masque de contre-mesure Mi (M1, M2, ...M_{M}) par les moyens de contre-mesure CM1. Dans ce qui suit, il est supposé qu'une session de cryptographie effectuée par l'algorithme de cryptographie CA1 et les moyens de contre-mesure CM1 met en jeu M valeurs de masque Mi avec M ≥ 1. Comme indiqué ci-dessus, de telles valeurs de masque sont utilisées par les moyens de contre-mesure CM1 pour « occulter » le fonctionnement de l'algorithme de cryptographie CA1, de telle sorte qu'il peut résister aux fuites et aux attaques par canaux auxiliaires.

Selon l'invention, le microprocesseur est configuré pour exécuter une commande GetMask qui est reçue de l'extérieur par l'intermédiaire du circuit d'interface de communication INT1.

Une telle commande GetMask peut être reçue après ou avant l'exécution d'une session de cryptographie.

Le microprocesseur traite la commande et envoie la valeur de masque Mi demandée par l'interface de communication sous certaines conditions qui seront détaillées ci-dessous.

Si la commande GetMask est reçue avant l'exécution de la session de cryptographie, le microprocesseur attend de préférence jusqu'à la fin de la session avant de traiter la commande, mais dans certaines conditions il peut également exécuter la commande avant l'exécution de la session de cryptographie si toutes les valeurs de masque impliquées dans la protection de la session de cryptographie ont déjà été générées. Dans certains modes de réalisation, il peut être prévu d'ignorer la commande GetMask si elle est reçue avant l'exécution de la session de cryptographie, lors de l'exécution, ou trop tardivement après l'exécution.

Selon un aspect de ce mode de réalisation de l'algorithme de cryptographie CA1, les valeurs de masque Mi impliquées dans la session de cryptographie sont stockées dans la mémoire sécurisée SM lors de la session de cryptographie, afin de permettre le traitement de la commande GetMask.

Une telle commande peut être envoyée par n'importe qui grâce au dispositif externe ED, par exemple un administrateur, un développeur, ou un technicien, afin d'effectuer des opérations de test et/ou de débogage sur l'algorithme de cryptographie CA1. Elle peut également être envoyée par un fraudeur souhaitant récupérer les valeurs de masque afin de procéder à des attaques par canaux auxiliaires.

Afin de garantir la sécurité contre les fraudeurs, le microprocesseur comprend également un compteur CNT, qui est configuré pour stocker un premier paramètre désigné « GetMaskValue » ou « GMV », et est utilisé pour compter le nombre de fois que la commande GetMask a été exécutée par le circuit intégré IC2. Le compteur CNT peut être un compteur sécurisé hardware relié au microprocesseur, tel qu'illustré sur la figure 2, ou un compteur numérique situé dans la mémoire sécurisée SM, géré par le microprocesseur ou l'algorithme de cryptographie CA1.

Un second paramètre désigné « GetMaskLimit » ou « GML » est également prévu, pour définir le nombre maximum de fois que la commande GetMask peut être exécutée par le circuit intégré IC2. Ce paramètre est par exemple stocké dans un registre protégé ou, tel qu'illustré dans la figure 2, dans la mémoire sécurisée SM. Il peut être chargé dans le registre ou la mémoire sécurisée en même temps que la clé secrète K est stockée dans la mémoire sécurisée, par exemple lors du processus de personnalisation conventionnel des circuits intégrés sécurisés pour les cartes à puces.

La limite prédéterminée GML est de préférence réglée à une valeur inférieure au nombre estimé de fois qui seraient nécessaires à un attaquant connaissant les valeurs de masque pour effectuer avec succès une attaque par canal auxiliaire de l'algorithme de cryptographie CA1.

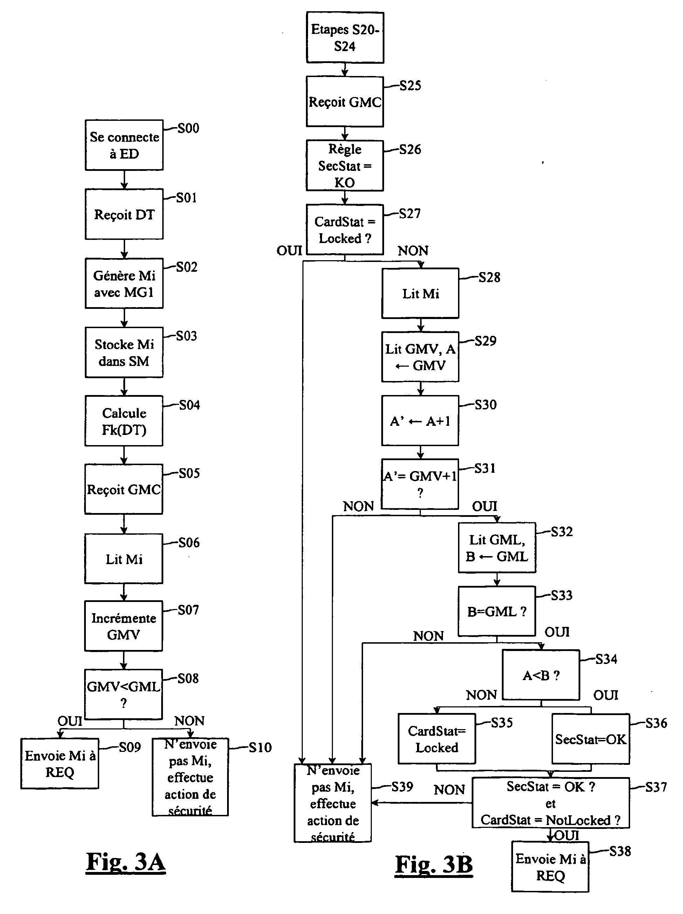

Les paramètres GMV et GML sont utilisés par le microprocesseur pour déterminer si une commande GetMask peut être exécutée ou non comme on le comprendra mieux à la lumière des exemples de réalisation de l'algorithme de cryptographie CA1 illustrés par les figures 3A et 3B.

La figure 3A est un organigramme indiquant les étapes principales d'un mode de réalisation de l'algorithme de cryptographie CA1. L'algorithme de cryptographie CA1 comprend les étapes S00 à S10 suivante :
- Etape S00 : le microprocesseur se connecte au dispositif externe ED et effectue des opérations habituelles, comme échanger des données, recevoir des commandes, par exemple une commande d'authentification requérant de crypter puis d'envoyer des données au dispositif externe ;
- Etape S01 : le microprocesseur MP reçoit des données DT à crypter par l'intermédiaire du circuit d'interface de communication INT1, et débute une session de cryptographie au cours de laquelle des données DT seront traitées pour produire des données cryptées F_{K}(DT) ;
- Etape S02 : le générateur de masque MG1 génère des valeurs de masque Mi (M1, M2, ...M_{M}) à partir de nombres aléatoires ou pseudo-aléatoires (comme indiqué ci-dessus, seule une valeur de masque Mi peut être générée selon le type de fonction de cryptographie mise en oeuvre par l'algorithme de cryptographie CA1 et le type de contre-mesure mise en oeuvre par les moyens de contre-mesure CM1) ;
- Etape S03 : les valeurs de masque Mi sont stockées dans la mémoire sécurisée SM par le microprocesseur ou l'algorithme de cryptographie ;
- Etape S04 : une session de cryptographie est effectuée, des données cryptées F_{K}(DT) sont calculées par l'algorithme de cryptographie CA1 au moyen de la clé K stockée dans la mémoire sécurisée, et les moyens de contre-mesure CM1 utilisent des valeurs de masque Mi lors de la session de cryptographie pour protéger l'algorithme de cryptographie contre les attaques par canaux auxiliaires ;
- Etape S05 : la commande GetMask est reçue par le microprocesseur (comme indiqué ci-dessus, la commande GetMask peut également être reçue avant l'exécution de la session de cryptographie) ;
- Etape S06 : le microprocesseur lit la valeur de masque Mi dans la mémoire sécurisée SM ;
- Etape S07 : le compteur CNT est incrémenté pour obtenir une valeur GetMaskValue incrémentée (GMV) ;
- Etape S08 : le microprocesseur effectue une comparaison entre GetMaskValue et GetMaskLimit, pour vérifier que GMV est inférieur à GML, puis va à l'étape S09 si GMV est inférieur à GML ou à l'étape S10 si GMV est supérieur ou égale à GML ;
- Etape S09 : le microprocesseur envoie les valeurs de masque Mi au dispositif externe, puis attend d'autres instructions ou traite d'autres données ;
- Etape S10 : le microprocesseur n'envoie pas les valeurs de masque Mi au dispositif externe. De plus, le microprocesseur peut effectuer une action de sécurité.

L'action de sécurité qui peut être effectuée par le circuit intégré est par exemple de verrouiller de façon permanente ou temporaire le circuit intégré, pour détruire la clé secrète K dans la mémoire sécurisée. Si le circuit intégré est verrouillé de façon permanente, il ne peut alors plus être utilisé ou au moins ne plus être utilisé pour exécuter un algorithme de cryptographie. Si le verrouillage est temporaire, le circuit intégré peut être réinitialisé, par exemple après une certaine période de temps, ou à l'aide d'un code de déverrouillage.

La figure 3B est un organigramme indiquant les étapes principales d'un autre mode de réalisation de l'algorithme de cryptographie CA1. Ce mode de réalisation implique que deux paramètres de sécurité CardStat (Statut de carte) et SecStat (Statut de sécurité) soient définis. CardStat peut être stocké dans la mémoire sécurisée SM pour toute la vie de la carte, alors que SecStat peut être stocké de façon temporaire comme variable locale dans chaque transaction dans la mémoire sécurisée ou une autre section de la mémoire MEM, ou un registre, un verrou, etc. SecStat peut être réglé sur deux valeurs différentes, « OK » ou « KO ». CardStat peut être réglé sur deux valeurs différentes, Locked (verrouillé) ou NotLocked (non verrouillé). L'algorithme de cryptographie CA1 comprend les étapes S20 à S39 suivante :
- Les étapes S20 à S24 sont identiques aux étapes S00 à S04 décrites précédemment et ne seront pas décrites une nouvelle fois ;
- Etape S25 : la commande GetMask est reçue par le circuit intégré (comme indiqué ci-dessus, la commande GetMask peut également être reçue avant l'exécution de la session de cryptographie) ;
- Etape S26 : SecStat est réglé sur KO ;
- Etape S27 : le microprocesseur vérifie si CardStat est réglé sur Locked : si CardStat est réglé sur Locked, le microprocesseur va alors à l'étape S39, sinon il va à l'étape S28 ;
- Etape S28 : le microprocesseur lit la valeur de masque Mi dans la mémoire sécurisée SM ;
- Etape S29 : le microprocesseur lit GMV dans le compteur et le mémorise comme variable A ;
- Etape S30 : la valeur de A est augmentée pour obtenir une variable incrémentée A', par exemple A est incrémenté de 1 ;
- Etape S31 : le microprocesseur compare la variable A' à une valeur de GMV incrémentée de la même valeur que la variable A, ici GMV est incrémenté de 1 : si la variable A' et la valeur incrémentée de GMV ne sont pas égales le microprocesseur va à l'étape S39, sinon le microprocesseur va à l'étape S32 ;
- Etape S32 : le microprocesseur lit GML dans la mémoire sécurisée et le mémorise comme variable B ;
- Etape S33 : les variables B et GML sont comparées : si les variables B et GML ne sont pas égales, le microprocesseur va à l'étape S39, sinon le microprocesseur va à l'étape S34 ;
- Etape S34 : une comparaison est effectuée entre la variable A et la variable B afin de déterminer si A est inférieure à B. Si la variable A est supérieure ou égale à la variable B, le microprocesseur va à l'étape S35, sinon le microprocesseur va à l'étape S36 ;
- Etape S35 : CardStat est réglé sur Locked ;
- Etape S36 : SecStat est réglé sur OK ;
- Etape S37 : après les étapes S35 ou S36, le microprocesseur détermine si CardStat est réglé sur NotLocked et si SecStat est réglé sur OK : si les deux conditions sont réunies, le microprocesseur va à l'étape S38, sinon le microprocesseur va à l'étape S39 ;
- Etape S38 : les valeurs de masque Mi sont envoyées au dispositif externe ;
- Etape S39 : le microprocesseur n'envoie pas les valeurs de masque Mi et effectue une action de sécurité du type proposé ci-dessus.

Lorsque le processus est de nouveau exécuté, si CardStat a été réglé sur Locked, le microprocesseur va de l'étape S27 à l'étape S39, de telle sorte qu'il n'envoie pas les valeurs de masque Mi et effectue une action de sécurité.

Un tel mode de réalisation est également protégé contre les attaques par injection d'erreurs. Par exemple, si une injection d'erreur se produit aux étapes S29 ou S30, A' est différent de GMV+1 à l'étape S31 et le microprocesseur va à l'étape S39.

La figure 4 illustre un second mode de réalisation d'un circuit intégré IC3 selon l'invention. Le circuit intégré IC3 comprend un algorithme de cryptographie CA2, des moyens de contre-mesure CM2, un générateur de masque MG2 ainsi qu'une mémoire sécurisée SM, un microprocesseur MP, un compteur CNT et un circuit d'interface de communication INT1 précédemment décrit. Le générateur de masque MG2 diffère du générateur de masque MG1 du circuit intégré IC2 en ce qu'il utilise un nombre de séquence déterministe ou "DSN" pour générer les valeurs de masque Mi (M1, M2, ...M_{M}) . L'utilisation du DSN pour fournir des valeurs de masque pour les contre-mesures dans les algorithmes de cryptographie est décrite dans la demande de brevet internationale PCT/FR2008/001544. Les demandes de brevet internationales PCT/FR2009/000071 et PCT/FR2009/000072 décrivent des exemples d'algorithmes de cryptographie comprenant des moyens de contre-mesure utilisant le DSN.

Lors d'une session de cryptographie, une séquence de valeurs de masque Mi (M1, M2, ...M_{M}) est générée à partir d'une fonction déterministe par le générateur de masque MG2 et à partir d'au moins un paramètre secret stocké dans la mémoire sécurisée, appelée la "graine". Les valeurs de masque Mi sont par conséquent générées d'une manière reproductible. En conséquence, pour exécuter la commande GetMask, il n'est plus nécessaire de stocker les valeurs de masque Mi dans la mémoire sécurisée lors de la session de cryptographie, puisqu'elles peuvent être régénérées par le générateur de masque MG2.

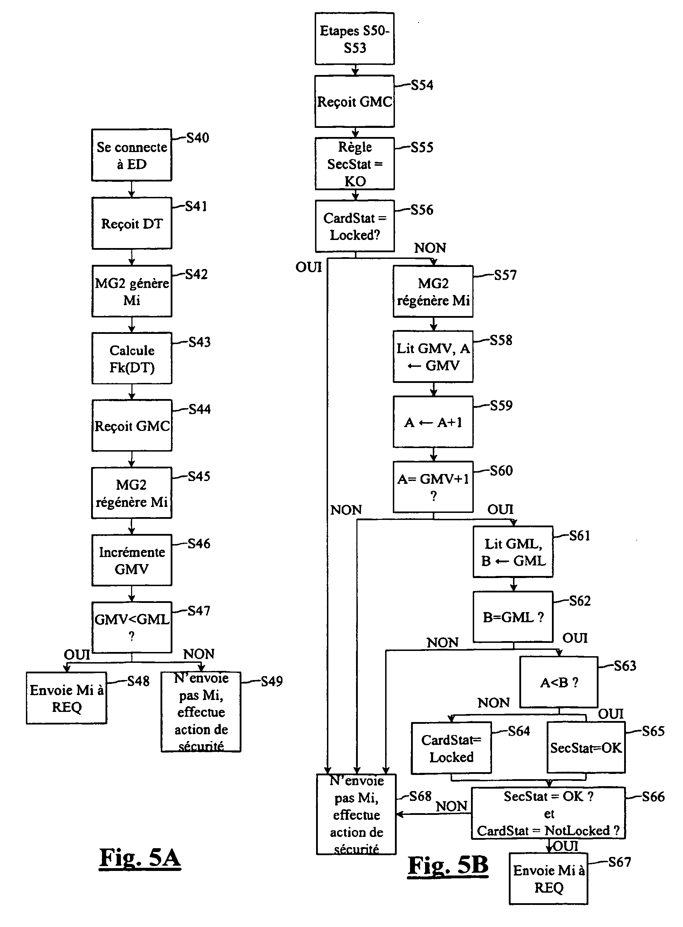

La figure 5A est un organigramme indiquant les étapes principales d'un mode de réalisation de l'algorithme de cryptographie CA2. L'algorithme de cryptographie CA2 comprend les étapes S40 à S49 suivante :
- Etape S40 : le microprocesseur se connecte au dispositif externe ED et effectue des opérations habituelles, comme échanger des données, recevoir des commandes comme une commande d'authentification requérant de chiffrer puis d'envoyer des données au dispositif externe ;
- Etape S41 : le microprocesseur MP reçoit des données DT à crypter par l'intermédiaire du circuit d'interface de communication INT1, et débute une session de cryptographie au cours de laquelle les données DT seront traitées pour produire des données cryptées F_{K}(DT) ;
- Etape S42 : le générateur de masque MG2 génère des valeurs de masque Mi (M1, M2, ...M_{M}) à partir d'un DSN. Comme indiqué ci-dessus, seule une valeur de masque Mi peut être générée selon le type de fonction de cryptographie mise en oeuvre par l'algorithme de cryptographie CA2 et le type de contre-mesures mises en oeuvre par les moyens de contre-mesure CM2 ;

- Etape S43 : une session de cryptographie est effectuée, des données cryptées F_{K}(DT) sont calculées par l'algorithme de cryptographie CA2 au moyen de la clé K stockée dans la mémoire sécurisée, et les moyens de contre-mesure CM2 utilisent des valeurs de masque Mi lors de la session de cryptographie pour protéger l'algorithme de cryptographie contre les attaques par canaux auxiliaires ;
- Etape S44 : la commande GetMask est reçue par le microprocesseur (comme indiqué ci-dessus, la commande GetMask peut également être reçue avant l'exécution de la session de cryptographie) ;
- Etape S45 : le générateur de masque MG2 régénère les valeurs de masque Mi à partir du DSN, et les fournit au microprocesseur ;
- Etape S46 : le compteur CNT est incrémenté pour obtenir une valeur GetMaskValue (GMV) incrémentée ;
- Etape S47 : le microprocesseur effectue une comparaison entre GetMaskValue et GetMaskLimit, pour vérifier que GMV est inférieur à GML, puis va à l'étape S48 si GMV est inférieur à GML ou à l'étape S49 si GMV est supérieur ou égal à GML ;
- Etape S48 : le microprocesseur envoie les valeurs de masque Mi au dispositif externe, puis attend d'autres instructions ou traite d'autres données ;
- Etape S49 : le microprocesseur n'envoie pas les valeurs de masque Mi au dispositif externe. De plus, le microprocesseur peut effectuer une action de sécurité du type décrit ci-dessus.

La figure 5B est un organigramme indiquant les étapes principales d'un autre mode de réalisation de l'algorithme de cryptographie CA2. Ce mode de réalisation met en jeu les paramètres de sécurité CardStat (Statut de carte) et SecStat (Statut de sécurité) décrits ci-dessus et comprend les étapes S50 à S68 suivante :
- Les étapes S50 à S53 sont identiques aux étapes S40 à S43 décrites précédemment et ne seront pas décrites une nouvelle fois ;
- Etape S54 : la commande GetMask est reçue par le circuit intégré (comme indiqué ci-dessus, la commande GetMask peut également être reçue avant l'exécution de la session de cryptographie) ;
- Etape S55 : SecStat est réglé sur KO ;
- Etape S56 : le microprocesseur vérifie si CardStat est réglé sur Locked : si CardStat est réglé sur Locked, le microprocesseur va à l'étape S68, sinon il va à l'étape S57 ;
- Etape S57 : le générateur de masque MG2 régénère les valeurs de masque Mi à partir du DSN, et les fournit au microprocesseur ;
- Etape S58 : le microprocesseur lit GMV dans le compteur et le mémorise comme variable A ;
- Etape S59 : la valeur de A est augmentée pour obtenir une variable A' incrémentée, par exemple A est incrémenté de 1 ;
- Etape S60 : le microprocesseur compare la variable A' à une valeur de GMV incrémentée de la même valeur que la variable A, ici GMV est incrémenté de 1 : si la variable A' et la valeur incrémentée de GMV ne sont pas égales, le microprocesseur va à l'étape S39, sinon le microprocesseur va à l'étape S32 ;
- Etape S61 : le microprocesseur lit GML dans la mémoire sécurisée et le mémorise comme variable B ;
- Etape S62 : les variables B et GML sont comparées : si les variables B et GML ne sont pas égales, le microprocesseur va à l'étape S68, sinon le microprocesseur va à l'étape S63 ;
- Etape S63 : une comparaison est effectuée entre la variable A et la variable B afin de déterminer si A est inférieure à B. Si la variable A est supérieure ou égale à la variable B, le microprocesseur va à l'étape S64, sinon le microprocesseur va à l'étape S65 ;
- Etape S64 : CardStat est réglé sur Locked ;
- Etape S65 : SecStat est réglé sur OK ;
- Etape S66 : après les étapes S64 ou S65, le microprocesseur détermine si CardStat est réglé sur NotLocked et si SecStat est réglé sur OK : si les deux conditions sont réunies, le microprocesseur va à l'étape S67, sinon le microprocesseur va à l'étape S68 ;
- Etape S67 : les valeurs de masque Mi sont envoyées au dispositif externe ;
- Etape S68 : le microprocesseur n'envoie pas les valeurs de masque Mi et effectue une action de sécurité du type décrit ci-dessus.

Dans un autre mode de réalisation de l'invention, le circuit intégré comprend un mode test dans lequel il peut être commuté lors du test, du débogage et de la personnalisation du circuit intégré. Puis le mode test est de préférence rendu inaccessible lorsque le circuit intégré doit être commercialisé, par exemple en faisant sauter des fusibles dans le circuit intégré. Il peut être prévu de configurer le circuit intégré en mode test pour envoyer des valeurs de masque Mi chaque fois que cela est requis. De cette façon, les développeurs et les fabricants peuvent tester et déboguer le circuit de cryptographie en fonction du besoin.

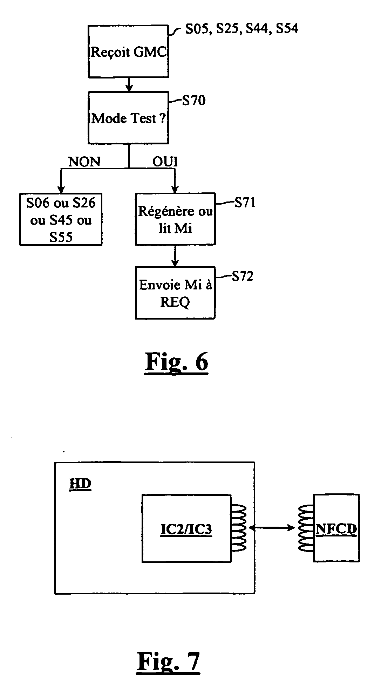

La figure 6 est un organigramme de l'algorithme de cryptographie selon ce mode de réalisation de l'invention. L'algorithme de cryptographie peut être dérivé de n'importe lequel des modes de réalisation des algorithmes de cryptographie CA1, CA2 précédemment décrits. Il comprend une étape de test S70 qui peut être effectuée après l'une des étapes S05, S25, S44, et S54 précédemment décrites. L'étape S70 consiste à déterminer si le microprocesseur est en mode test ou non. S'il n'est pas en mode test, le microprocesseur va à l'une des étapes S06, S26, S45 ou S55 précédemment décrites. Si le microprocesseur est en mode test, il exécute les étapes S71 et S72. Lors de l'étape S71, le microprocesseur lit les valeurs de masque Mi dans la mémoire (si générées par MG1) ou les fait régénérer par le générateur de masque MG2. Lors de l'étape S72, les valeurs de masque Mi sont envoyées au dispositif externe.

Il apparaîtra clairement à l'homme de l'art que la présente invention est susceptible de nombreux autres modes de réalisation. En particulier, les étapes qui ont été décrites peuvent être mises en oeuvre de nombreuses autres manières, par exemple les étapes permettant d'incrémenter le compteur, les étapes de comparaison de GMV et GML, etc. Par exemple, le compteur CNT peut être décrémenté chaque fois qu'une commande GetMask est reçue, et l'action de sécurité effectuée lorsque le compteur atteint zéro ou une valeur basse prédéterminée. De la même façon, bien que l'on ait indiqué ci-dessus que certaines étapes des algorithmes de cryptographie selon l'invention sont effectuées, contrôlées ou déclenchées par un microprocesseur, en particulier les étapes S06 à S08, S26 à S37, S45 à S47, S55 à S66, de telles étapes peuvent également être effectuées, contrôlées ou déclenchées par une machine d'état hardware dédiée intégrée au microprocesseur ou intégrée dans l'algorithme de cryptographie CA1, CA2 s'il elle est mise en oeuvre comme un coprocesseur. De même, l'étape S03 de stockage des valeurs de masque Mi lors d'une session de cryptographie peut être effectuée par le microprocesseur ou par l'algorithme de cryptographie CA1, CA2 s'il est mis en oeuvre comme un coprocesseur, ou par une machine d'état hardware dédiée intégrée au microprocesseur ou intégrée à l'algorithme de cryptographie CA1, CA2. De la même façon, bien que le générateur de masque MG1, MG2 ait été représenté sur les figures comme un composant séparé par rapport au microprocesseur ou à l'algorithme de cryptographie CA1, CA2, le générateur de masque MG1, MG2 peut également être mis en oeuvre sous la forme d'un programme exécuté par le microprocesseur, ou sous la forme d'un circuit hardware dédié intégré au microprocesseur ou à l'algorithme de cryptographie CA1, CA2 s'il est mis en oeuvre comme un coprocesseur, ou intégré à une machine d'état hardware dédiée intégrée au microprocesseur ou intégrée à l'algorithme de cryptographie CA1, CA2. Finalement, des modes de réalisation de l'invention peuvent également être mis en oeuvre dans un circuit intégré sans un microprocesseur, dans lequel les commandes et les différentes étapes décrites ci-dessus sont exécutées par une machine d'état hardware.

Il apparaitra également à l'homme de l'art qu'un circuit intégré comprenant un algorithme de cryptographie selon l'invention est aussi susceptible de nombreuses applications. La figure 7 illustre schématiquement, comme exemple d'application, un dispositif portable HD dans lequel le circuit intégré IC2 ou IC3 est intégré. Le dispositif portable HP peut être une carte à puce, une étiquette, un téléphone portable, un PDA (Assistant numérique personnel), etc. Le circuit intégré IC2 ou IC3 est connecté à une bobine d'antenne et est configuré pour échanger des données et effectuer une transaction avec un dispositif externe NFC (Near Field Communication) NFCD tel qu'une carte ou un lecteur d'étiquette sans contact, un point de vente NFC, un autre téléphone portable NFC.

## Revendications

1. Circuit intégré (IC1, IC2) comprenant :
- un circuit d'interface de communication (INT1),
- un algorithme de cryptographie (CA1, CA2),
- des moyens de contre-mesure (CM1, CM2) pour protéger l'algorithme de cryptographie contre les attaques par canaux auxiliaires, et
- des moyens de génération de masque (MG1, MG2) pour fournir aux moyens de contre-mesure des valeurs de masque (Mi),
**caractérisé en ce qu'**il est configuré pour exécuter une commande spécifique (GetMask, GMC) requérant la divulgation des valeurs de masque utilisées par les moyens de contre-mesure (CM1, CM2) pour protéger l'algorithme de cryptographie lors d'une session de cryptographie, et, en réponse à une telle commande, envoyer les valeurs de masque par l'intermédiaire du circuit d'interface de communication.

2. Circuit intégré (IC1) selon la revendication 1, comprenant des moyens de génération de masque aléatoires ou pseudo-aléatoires (MG1) et configuré pour :
- stocker dans une mémoire sécurisée (SM), lors d'une session de cryptographie, des valeurs de masque (Mi) utilisées par les moyens de contre-mesure (CM1, CM2) pour protéger l'algorithme de cryptographie, et
- en réponse à la commande spécifique, lire les valeurs de masque dans la mémoire sécurisée.

3. Circuit intégré (IC2) selon la revendication 1, comprenant des moyens de génération de masque (MG2) configurés pour générer des valeurs de masque (Mi) à partir d'un nombre de séquence déterministe (DSN), et configuré pour, en réponse à la commande spécifique, régénérer, grâce aux moyens de génération de masque (MG2), des valeurs de masque utilisées lors d'une session de cryptographie.

4. Circuit intégré (IC1, IC2) selon l'une des revendications 1 à 3, configuré pour compter (CNT, GMV) le nombre de fois que la commande spécifique (GetMask, GMC) a été exécutée, et ne pas exécuter la commande si elle a été exécutée N fois.

5. Circuit intégré (IC1, IC2) selon la revendication 4, configuré pour effectuer une action de sécurité si la commande spécifique (GetMask, GMC) est reçue après avoir été exécutée N fois.

6. Circuit intégré (IC1, IC2) selon la revendication 5, configuré pour se verrouiller de façon permanente si la commande spécifique (GetMask, GMC) est reçue après avoir été exécutée N fois.

7. Circuit intégré (IC1, IC2) selon l'une des revendications 4 à 6, dans lequel le nombre N de fois que la commande spécifique peut être exécutée est défini par un paramètre (GML ; GMV ≥ GML) stocké de façon sécurisée dans le circuit intégré.

8. Circuit intégré (IC1, IC2) selon l'une des revendications 4 à 7, configuré de telle sorte que le nombre N de fois que la commande spécifique peut être exécutée est inférieur au nombre estimé de fois qui seraient nécessaires pour qu'un attaquant connaissant les valeurs de masque (Mi) exécute avec succès une attaque par canal auxiliaire de l'algorithme de cryptographie (CA1, CA2).

9. Circuit intégré (IC1, IC2) selon l'une des revendications 4 à 8, comprenant un mode test dans lequel le nombre de fois que la commande spécifique (GetMask, GMC) peut être exécutée n'est pas limité.

10. Dispositif portable (HD), **caractérisé en ce qu'**il comprend un circuit intégré selon l'une des revendications 1 à 9.

11. Procédé d'exécution d'une session de cryptographie dans un circuit intégré (IC1, IC2) comprenant un algorithme de cryptographie (CA1, CA2), des moyens de contre-mesure (CM1, CM2) pour protéger l'algorithme de cryptographie contre les attaques par canaux auxiliaires, et des moyens de génération de masque (MG1, MG2) pour fournir des valeurs de masque (Mi) aux moyens de contre-mesure,
**caractérisé en ce qu'**il comprend les étapes consistant à :
- recevoir une commande spécifique (GetMask, GMC) requérant la divulgation des valeurs de masque utilisées par les moyens de contre-mesure (CM1, CM2) pour protéger l'algorithme de cryptographie lors de la session de cryptographie, et
- en réponse à la commande spécifique, envoyer les valeurs de masque.

12. Procédé selon la revendication 11, comprenant les étapes consistant à :
- stocker dans une mémoire sécurisée (SM), lors d'une session de cryptographie, des valeurs de masque aléatoires ou pseudo-aléatoires utilisées par les moyens de contre-mesure (CM1, CM2) pour protéger l'algorithme de cryptographie, et
- en réponse à la commande spécifique, lire les valeurs de masque dans la mémoire sécurisée.

13. Procédé selon la revendication 11, comprenant les étapes consistant à :
- lors de la session de cryptographie, générer des valeurs de masque à partir d'un nombre de séquence déterministe, et
- en réponse à la commande spécifique, régénérer les valeurs de masque à l'aide du nombre de séquence déterministe.

14. Procédé selon l'une des revendications 11 à 13, comprenant les étapes consistant à compter (CNT, GMV) le nombre de fois que la commande spécifique (GetMask, GMC) a été exécutée, et à ne pas exécuter la commande si elle a été exécutée N fois.

15. Procédé selon la revendication 14, comprenant l'étape consistant à effectuer une étape de sécurité si la commande spécifique (GetMask, GMC) est reçue après avoir été exécutée N fois.

16. Procédé selon la revendication 15, comprenant une étape consistant à verrouiller le circuit intégré de façon permanente si la commande spécifique (GetMask, GMC) est reçue après avoir été exécutée N fois.

17. Procédé selon l'une des revendications 14 à 16, comprenant une étape consistant à déterminer le nombre N de fois que la commande spécifique peut être exécutée de telle sorte que N soit inférieur au nombre estimé de fois qui seraient nécessaires pour qu'un attaquant connaissant les valeurs de masque exécute avec succès une attaque par canal auxiliaire de l'algorithme de cryptographie (CA1, CA2).

## Claims

1. An integrated circuit (IC1, IC2) comprising:
- a communication interface circuit (INT1),
- a cryptographic algorithm (CA1, CA2),
- countermeasure means (CM1, CM2) for protecting the cryptographic algorithm against side-channel attacks, and
- mask generating means (MG1, MG2) for providing the countermeasure means with mask values (Mi),
**characterized in that** it is configured to execute a specific command (GetMask, GMC) requiring the disclosure of mask values used by the countermeasures means (CM1, CM2) to protect the cryptographic algorithm during a cryptographic session, and, in response to such a command, to send the mask values through the communication interface circuit.

2. An integrated circuit (IC1) according to claim 1, comprising random or pseudo-random mask generating means (MG1) and configured to:
- store in a secure memory (SM), during a cryptographic session, mask values (Mi) used by the countermeasures means (CM1, CM2) to protect the cryptographic algorithm, and
- in response to the specific command, read the mask values in the secure memory.

3. An integrated circuit (IC2) according to claim 1, comprising mask generating means (MG2) configured to generate mask values (Mi) from a deterministic sequence number (DSN), and configured to, in response to the specific command, regenerate, by means of the mask generating means (MG2), mask values used during a cryptographic session.

4. An integrated circuit (IC1, IC2) according to one of claims 1 to 3, configured to count (CNT, GMV) the number of times the specific command (GetMask, GMC) was executed, and to not execute the command if it has been executed N times.

5. An integrated circuit (IC1, IC2) according to claim 4, configured to perform a security action if the specific command (GetMask, GMC) is received after having been executed N times.

6. An integrated circuit (IC1, IC2) according to claim 5, configured to permanently lock if the specific command (GetMask, GMC) is received after having been executed N times.

7. An integrated circuit (IC1, IC2) according to one of claims 4 to 6, wherein the number N of times the specific command can be executed is defined by a parameter (GML; GMV≥GML) securely stored in the integrated circuit.

8. An integrated circuit (IC1, IC2) according to claims 4 to 7, configured so that the number N of times the specific command can be executed is lower than the estimated number of times that would be necessary for an attacker knowing the mask values (Mi) to successfully carry out a side-channel attack of the cryptographic algorithm (CA1, CA2).

9. An integrated circuit (IC1, IC2) according to one of claims 4 to 8, comprising a test mode in which the number of times the specific command (GetMask, GMC) can be executed is not limited.

10. A handheld device (HD), **characterized in that** it comprises an integrated circuit according to one of claims 1 to 9.

11. A method for carrying out a cryptographic session in an integrated circuit (IC1, IC2) comprising a cryptographic algorithm (CA1, CA2), countermeasure means (CM1, CM2) for protecting the cryptographic algorithm against side-channel attacks, and mask generating means (MG1, MG2) for providing the countermeasure means with mask values (Mi),
**characterized in that** it comprises:
- receiving a specific command (GetMask, GMC) requiring the disclosure of mask values used by the countermeasures means (CM1, CM2) to protect the cryptographic algorithm during the cryptographic session, and
- in response to the specific command, sending the mask values.

12. A method according to claim 11, comprising:
- storing in a secure memory (SM), during a cryptographic session, random or pseudo-random mask values used by the countermeasures means (CM1, CM2) to protect the cryptographic algorithm, and
- in response to the specific command, reading the mask values in the secure memory.

13. A method according to claim 11, comprising:
- during the cryptographic session, generating mask values from a deterministic sequence number, and
- in response to the specific command, regenerating the mask values by means of the deterministic sequence number.

14. A method according to one of claims 11 to 13, comprising steps of counting (CNT, GMV) the number of times the specific command (GetMask, GMC) was executed, and not executing the command if it has been executed N times.

15. A method according to claim 14, comprising performing a security step if the specific command (GetMask, GMC) is received after having been executed N times.

16. A method according to claim 15, comprising permanently locking the integrated circuit if the specific command (GetMask, GMC) is received after having been executed N times.

17. A method according to one of claim 14 to 16, comprising determining the number N of times the specific command can be executed in order that N is lower than the estimated number of times that would be necessary for an attacker knowing the mask values to successfully carry out a side-channel attack of the cryptographic algorithm (CA1, CA2).

## Patentansprüche

1. Integrierte Schaltung (IC1, IC2), umfassend
- eine Kommunikationsschnittstellenschaltung (INT1),
- einen kryptographischen Algorithmus (CA1, CA2),
- Gegenmaßnahmenmittel (CM1, CM2), um den kryptographischen Algorithmus gegen die Angriffe durch die Hilfskanäle zu schützen, und
- Maskenerzeugungsmittel (MG1, MG2), um den Gegenmaßnahmenmitteln Maskenwerte (Mi) zu liefern,
**dadurch gekennzeichnet, dass** sie konfiguriert ist, ein spezifisches Kommando (GetMask, GMC) auszuführen, das die Bekanntmachung der durch die Gegenmaßnahmenmittel (CM1, CM2) zur Schützung des kryptographischen Algorithmus bei einer Kryptographie-Session genutzten Maskenwerte erfordert, und, in Antwort auf ein solches Kommando, die Maskenwerte durch die Kommunikationsschnittstellenschaltung zu senden.

2. Integrierte Schaltung (IC1) nach Anspruch 1, umfassend Mittel zur Erzeugung von Zufalls- oder Pseudozufallsmasken (MG1) und die dafür konfiguriert ist,
- durch die Gegenmaßnahmenmittel (CM1, CM2) zur Schützung des kryptographischen Algorithmus genutzte Maskenwerte (Mi) bei einer Kryptographie-Session in einem sicheren Speicher (SM) zu speichern, und
- in Antwort auf das spezifische Kommando die Maskenwerte im sicheren Speicher einzulesen.

3. Integrierte Schaltung (IC2) nach Anspruch 1, umfassend Maskenerzeugungsmittel (MG2), die dafür konfiguriert sind, Maskenwerte (Mi) basierend auf einer Zahl deterministischer Sequenz (DSN) zu erzeugen, und die dafür konfiguriert ist, in Antwort auf das spezifische Kommando bei einer Kryptographie-Session genutzte Maskenwerte anhand von den Maskenerzeugungsmitteln (MG2) zu rekonstruieren.

4. Integrierte Schaltung (IC1, IC2) nach einem der Ansprüche 1 bis 3, die dafür konfiguriert ist zu zählen (CNT, GMV), wie oft das spezifische Kommando (GetMask, GMC) ausgeführt worden ist, und das Kommando nicht auszuführen, wenn es N mal ausgeführt worden ist.

5. Integrierte Schaltung (IC1, IC2) nach Anspruch 4, die dafür konfiguriert ist, einen Sicherheitsvorgang auszuführen, wenn das spezifische Kommando (GetMask, GMC) empfangen ist, nachdem es N mal ausgeführt worden ist.

6. Integrierte Schaltung (IC1, IC2) nach Anspruch 5, die dafür konfiguriert ist, sich permanent einzuschließen, wenn das spezifische Kommando (GetMask, GMC) empfangen ist, nachdem es N mal ausgeführt worden ist.

7. Integrierte Schaltung (IC1, IC2) nach einem der Ansprüche 4 bis 6, bei dem die Anzahl N von Malen, mit der das spezifische Kommando ausgeführt werden kann, durch einen sicher in der integrierten Schaltung gespeicherten Parameter (GML ; GMV ≥ GML) definiert wird.

8. Integrierte Schaltung (IC1, IC2) nach einem der Ansprüche 4 bis 7, die so konfiguriert ist, dass die Anzahl N von Malen, mit der das spezifische Kommando ausgeführt werden kann, kleiner ist als die geschätzte Anzahl von Malen, die ein die Maskenwerte (Mi) kennender Angreifer brauchen würde, um einen Hilfskanalangriff des kryptographischen Algorithmus (CA1, CA2) erfolgreich auszuführen.

9. Integrierte Schaltung (IC1, IC2) nach einem der Ansprüche 4 bis 8, umfassend einen Testmodus, bei dem die Anzahl von Malen, mit der das spezifische Kommando (GetMask, GMC) ausgeführt werden kann, nicht beschränkt ist.

10. Tragbare Vorrichtung (HD), **dadurch gekennzeichnet, dass** sie eine integrierte Schaltung nach einem der Ansprüche 1 bis 9 umfasst.

11. Verfahren zur Ausführung einer Kryptographie-Session in einer integrierten Schaltung (IC1, IC2), umfassend einen kryptographischen Algorithmus (CA1, CA2), Gegenmaßnahmenmittel (CM1, CM2) zur Schützung des kryptographischen Algorithmus gegen die Hilfskanalangriffe, und Maskenerzeugungsmittel (MG1, MG2), um den Gegenmaßnahmenmitteln Maskenwerte (Mi) zu liefern,
**dadurch gekennzeichnet, dass** es die Schritte umfasst, die darin bestehen,
- ein spezifisches Kommando (GetMask, GMC) zu empfangen, das die Bekanntmachung der durch die Gegenmaßnahmenmittel (CM1, CM2) zur Schützung des kryptographischen Algorithmus bei der Kryptographie-Session genutzten Maskenwerte erfordert, und
- in Antwort auf das spezifische Kommando die Maskenwerte zu senden.

12. Verfahren nach Anspruch 11, umfassend die Schritte, die darin bestehen,
- durch die Gegenmaßnahmenmittel (CM1, CM2) zur Schützung des kryptographischen Algorithmus genutzte Zufalls- oder Pseudozufallsmaskenwerte bei einer Kryptographie-Session in einem sicheren Speicher (SM) zu speichern, und
- in Antwort auf das spezifische Kommando die Maskenwerte im sicheren Speicher einzulesen.

13. Verfahren nach Anspruch 11, umfassend die Schritte, die darin bestehen,
- auf einer Zahl deterministischer Sequenz basierende Maskenwerte bei der Kryptographie-Session zu erzeugen, und
- in Antwort auf das spezifische Kommando die Maskenwerte anhand von der Zahl deterministischer Sequenz zu rekonstruieren.

14. Verfahren nach einem der Ansprüche 11 bis 13, umfassend die Schritte, die darin bestehen, die Anzahl von Malen zu zählen (CNT, GMV), mit der das spezifische Kommando (GetMask, GMC) ausgeführt worden ist, und das Kommando nicht auszuführen, wenn es N mal ausgeführt worden ist.

15. Verfahren nach Anspruch 14, umfassend den Schritt, der darin besteht, einen Sicherheitsvorgang auszuführen, wenn das spezifische Kommando (GetMask, GMC) empfangen ist, nachdem es N mal ausgeführt worden ist.

16. Verfahren nach Anspruch 15, umfassend einen Schritt, der darin besteht, die integrierte Schaltung permanent einzuschließen, wenn das spezifische Kommando (GetMask, GMC) empfangen ist, nachdem es N mal ausgeführt worden ist.

17. Verfahren nach einem der Ansprüche 14 bis 16, umfassend einen Schritt, der darin besteht, die Anzahl N von Malen, mit der das spezifische Kommando ausgeführt werden kann so zu bestimmen, dass N kleiner ist als die geschätzte Anzahl von Malen, die ein die Maskenwerte kennender Angreifer brauchen würde, um einen Hilfskanalangriff des kryptographischen Algorithmus (CA1, CA2) erfolgreich auszuführen.
